# EUROPÄISCHE PATENTANMELDUNG

(11) **EP 4 328 440 A1**
(43) Veröffentlichungstag der Anmeldung: **28.02.2024**
(21) Anmeldenummer: 22192060.6
(22) Anmeldetag: 25.08.2022
(51) Int. Cl.: F02C 7/36, F16C 17/04, F16C 17/26, F16C 23/02, F16C 33/04, F03D 15/00, F16H 57/08, F16C 23/04, F16C 33/12

(54) **PLANETENGETRIEBE MIT AXIAL GLEITGELAGERTEN PLANETENRÄDERN**

(71) Anmelder: Flender GmbH, 46395 Bocholt (DE)
(72) Erfinder: BUCHHORN, Nico, 46395 Bocholt (DE); BÖING, Alfons, 46395 Bocholt (DE); LOHMANN, Christoph, 46395 Bocholt (DE); MEYER, Thomas, 46395 Bocholt (DE)
(74) Vertreter: Michalski Hüttermann & Partner Patentanwälte mbB

(57) **Zusammenfassung**

Die Erfindung betrifft ein Planetengetriebe 10 für eine über einen Rotor 72 angetriebene Windkraftanlage 70 mit zumindest einer in einem Getriebegehäuse 12 um eine Drehachse A_{D} umlaufenden Planetenstufe 14, wobei die zumindest eine Planetenstufe 14 einen mit dem Rotor 72 mittelbar verbundenen Planetenträger 16 mit mehreren in dem Planetenträger 16 umlaufend und radial gleitgelagerten und wechselseitig mit einem Hohlrad 20 und einem Sonnenrad 22 in einem Verzahnungseingriff stehenden Planetenrädern 18 aufweist. Die Planetenräder 18 sind zwischen Seitenwangen 24, 26 des Planetenträgers 16 aufgenommen und in jeweiliger axialer Richtung über Gleitflächen 30 der Seitenwangen 24, 26 axial gleitgelagert. Die Gleitflächen 30 ins aus einer verschleißfesten Schicht aus Diamond-Like-Carbon gebildet. Ein Vorteil der Gleitflächen 30 aus Diamond-Like-Carbon (DLC) besteht darin, dass über ein gezielt an die jeweilige Anwendung angepasste DLC-Schicht der Reibwert und der Verschleiß der Kontaktpaarung optimiert werden kann

## Beschreibung

Die Erfindung betrifft ein Planetengetriebe für eine über einen Rotor angetriebene Windkraftanlage mit zumindest einer in einem Getriebegehäuse um eine Drehachse A_{D} umlaufenden Planetenstufe, wobei die zumindest eine Planetenstufe einen Planetenträger und ein Hohlrad aufweist und der Planetenträger oder das Hohlrad zumindest mittelbar mit dem Rotor antriebsverbunden ist. Der Planetenträger weist mit mehrere in dem Planetenträger umlaufend und radial gleitgelagerte und wechselseitig mit dem Hohlrad und einem Sonnenrad in einem Verzahnungseingriff stehende Planetenrädern auf. Die Planetenräder sind zwischen Seitenwangen des Planetenträgers aufgenommen und in jeweiliger axialer Richtung über Gleitflächen der Seitenwangen axial gleitgelagert.

Getriebe, insbesondere Planetengetriebe, für Windkraftanlagen können mit Gleitlagerungen ausgeführt sein. Dies betrifft bei Planetengetrieben in Regel die radiale Lagerung der Planetenräder auf dem entsprechenden Planetenträger. Sowohl während der Montage als auch während eines Betriebs des Planetengetriebes treten zudem Axialkräfte auf bzw. die Planetenräder können sich in einem gewissen Maß axial verlagern. Da eine solche Gleitlagerung der Planetenräder keine Axialkräfte aufnehmen kann, ist immer auch eine axiale Lagerung der Planetenräder gegenüber den Seitenwangen des Planetenträgers erforderlich, zwischen denen die Planetenräder aufgenommen sind. Die axiale Führung bzw. Abstützung der Planetenräder gegenüber den Seitenwangen erfolgt in der Regel über Anlaufscheiben, die bspw. aus Bronze gefertigt sind. Die Seitenwangen erhalten über diese Anlaufscheiben eine Gleitfläche, auf der die entsprechende Gegenfläche des Planetenrades abgleiten kann und über die die auftretenden Axialkräfte abgestützt werden können. Die Anlaufscheiben werden zwar lose in den Planetenträger eingelegt, müssen aber dennoch über eine umfängliche Schlüsselfläche gegen Verdrehen gegenüber dem Planetenträger gesichert werden. Eine derartige Axiallagerung der Planetenräder beschreibt die EP 2 383 480 A1 und die DE 10 2016 219 008 A1.

Nachteilig bei dieser Lösung, die Seitenwangen des Planetenträgers mit verdrehgesicherten Anlaufscheiben zu versehen, ist die hohe Komplexität hinsichtlich der Fertigung, so dass diese zu hohen Bearbeitungskosten des Planetenträgers führt. Es besteht ein ständiges Bedürfnis eine konstruktiv und fertigungstechnisch einfachere Lösung zu finden, mit der die auftretenden Axialkräfte aufgenommen werden können.

Es ist die Aufgabe der Erfindung Maßnahmen aufzuzeigen, die über eine konstruktiv und fertigungstechnisch einfachere Lösung die Aufnahme der auftretenden Axialkräfte ermöglichen.

Die Lösung der Aufgabe erfolgt durch ein Planetengetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Planetengetriebe für eine über einen Rotor angetriebene Windkraftanlage mit zumindest einer in einem Getriebegehäuse um eine Drehachse AD umlaufenden Planetenstufe, wobei die zumindest eine Planetenstufe einen Planetenträger und ein Hohlrad aufweist und der Planetenträger oder das Hohlrad zumindest mittelbar mit dem Rotor antriebsverbunden ist. Der Planetenträger weist mit mehrere in dem Planetenträger umlaufend und radial gleitgelagerte und wechselseitig mit dem Hohlrad und einem Sonnenrad in einem Verzahnungseingriff stehende Planetenrädern auf und die Planetenräder sind zwischen Seitenwangen des Planetenträgers aufgenommen und über in jeweiliger axialer Richtung hervorstehende Gleitflächen der Seitenwangen axial gleitgelagert. Es ist vorgesehen, dass die Gleitflächen aus einer verschleißfesten Schicht gebildet sind. Bevorzugt ist die verschleißfeste Schicht aus Diamond-Like-Carbon oder durch eine nitriergehärtete Schicht gebildet.

Das Planetengetriebe kann eine oder mehrere Planetenstufen umfassen. Die jeweils letzte Planetenstufe kann mittelbar oder unmittelbar einen Generator antreiben. Bei einem mittelbaren Antrieb kann eine zwischengeschaltete Stirnradstufe vorgesehen sein. Der Planetenträger kann korbartig aufgeführt sein, wobei der Planetenträger über geeigneten Lagerungen drehbar gegenüber einem Gehäuse bzw. einem Gehäuseteil drehbar um die Drehachse A_{D} gelagert ist. Für diese Lagerung kann eine Wälzlageranordnung vorgesehen sein. Die Drehachse A_{D} legt vorliegend die Axialrichtung fest, so dass sich aus dieser Axialrichtung die jeweiligen Radialrichtungen ergeben.

Die Planetenräder sind über Planetenachsen an dem Planetenträger gehalten. Die Planetenachsen laufen parallel und versetzt zu der Drehachse A_{D}. Die Planetenräder werden zu beiden axialen Seiten jeweils von einer Seitenwange des Planetenträgers eingefasst. Die Planetenträger sind in eine radiale Richtung nach innen und eine radiale Richtung nach außen von dem Planetenträger bzw. den Seitenwangen freigestellt und stehen in jeweiligem Verzahnungseingriff mit einem Hohlrad und einem Sonnenrad bzw. einer Sonnenradwelle.

Bei der verschleißfesten Schicht aus Diamond-Like-Carbon handelt es sich um eine Schicht bzw. eine Beschichtung mit amorphem Kohlenstoff mit wenigen Mikrometern Schichtdicke.

Die Gleitflächen, die aus einer verschleißfesten Schicht aus Diamond-Like-Carbon gebildet sind, sind strukturell betrachtet den Seitenwangen zugeordnet. Die Seitenwangen weisen eine Innenfläche auf, über die die Gleitflächen in axialer Richtung, also in Richtung des jeweiligen Planetenrades, hervorstehen. Die Innenfläche der Seitenwangen verläuft zweckmäßigerweise in einer Axialebene. Die Gleitflächen sind folglich axial erhaben gegenüber der Innenfläche, so dass in einem Betrieb die Planetenräder die Gleitflächen berühren und nicht die Innenflächen. Die Gleitflächen sind in geeigneter Weise lösbar von den Seitenwangen ausgeführt. Die Seitenwangen weisen für die Aufnahme einer oder mehrerer der Gleitflächen eine geeignete Aufnahmestruktur auf. Bei der Aufnahmestruktur handelt es sich zweckmäßiger um eine Vertiefung oder eine Ausnehmung gegenüber der Stirnfläche der Seitenwange.

Gegenüber dem Stand der Technik werden die Anlaufscheiben durch eine oder mehrere Gleitflächen, die aus einer verschleißfesten Schicht aus Diamond-Like-Carbon gebildet sind, je Seitenwange ersetzt. Hierdurch entfallen sowohl die Fertigungs- und Montagekosten für die Anlaufscheiben, als auch die anteiligen Kosten für die Bearbeitung der Seitenwangen. Zu nennen sich hier die Fertigung der aufwendigen Funktionsflächen zur Aufnahme der Anlaufscheiben, die Verdrehsicherung der Anlaufscheiben und deren Anlaufscheiben. Zudem entfällt die Verwendung des hochpreisigen Bronzematerials für die Anlaufscheiben. Ein entscheidender Vorteil der verschleißfesten Gleitflächen aus Diamond-Like-Carbon (DLC) besteht darin, dass über eine gezielt an die jeweilige Anwendung angepasste DLC-Schicht der Reibwert und der Verschleiß der Kontaktpaarung des tribologischen Systems, unter Berücksichtigung des eingesetzten Schmiermittels, optimiert werden kann. Insgesamt führen die beschriebenen Maßnahmen zu einer weniger komplexen Bearbeiten der Seitenwangen des Planetenträgers.

In einer bevorzugten Ausgestaltung des Planetengetriebes weist jede Seitenwange mehrere umfänglich beabstandete Gleitflächen auf. Bevorzugt sind drei Gleitflächen je Seitenwange vorgesehen. Hierdurch wird erreicht, dass das jeweilige Planetenrad eine 3-Punkt-Anlage gegenüber der Seitenwange einnimmt, die vorteilhafter Weise statisch bestimmt ist. Besonders bevorzugt ist, wenn eine Drehachse A_{D} der Planetenräder innerhalb eines durch die drei umfänglich beabstandeten Gleitflächen aufgespannten Dreiecks liegt.

Zudem ist insbesondere eine Ausführung bevorzugt, bei der die Gleitflächen im Wesentlichen jeweils einen balligen Oberflächenverlauf aufweisen. Durch die Balligkeit der Gleitfläche wird sichergestellt, dass es zu keinen Lastüberhöhungen durch ein Kantentragen bei einem Verkippen des Planetenrads gegenüber der Planetenachse während der Montage und während des Betriebs kommt. Bedingt durch die geringere Auflagefläche, verglichen mit herkömmlichen Anlagescheiben, bei zeitgleichem Kugel-Ebene-Kontakt zwischen Gleitfläche und Planetenrad kommt es zu deutlich höheren Pressungen. Die hierfür erforderliche verschleißfeste und robuste Oberfläche wird einerseits durch die ballige und DLCbeschichtete Gleitfläche und andererseits durch die harte Gegenfläche des Planetenrades bereitgestellt, wobei letztere üblicherweise einsatzgehärtet ist.

Eine besonders bevorzugte Ausgestaltung zeichnet sich dadurch aus, dass die Gleitflächen stirnseitig auf jeweils in axialer Richtung in die Seitenwangen eingesetzten Stiftelementen angeordnet sind. Über die Stiftelemente ist sichergestellt, dass die Gleitfläche bezogen auf die Seitenwange genau positioniert werden kann. Insbesondere kann in konkreter Ausgestaltung vorgesehen sein, dass die Stiftelemente in jeweiligen Durchgangsbohrungen der Seitenwangen einsitzen. Durchgangsbohrungen können mit einem geringen fertigungstechnischen Aufwand in die Seitenwangen eingebracht werden. Insbesondere können die Durchgangsbohrungen von außen in die Seitenwangen eingebracht werden, d.h. es ist nicht erforderlich in dem Raum zwischen den sich gegenüberstehenden Seitenwangen des Planetenträgers eine Bearbeitung vorzunehmen.

In einer weiterhin bevorzugten Ausgestaltung sind die Stiftelemente als Schraubkörper ausgeführt sind und in die jeweilige Seitenwange eingeschraubt. Insbesondere ist vorgesehen, dass die geschraubten Stiftelemente, von außen in Richtung des Raums zwischen den sich gegenüberstehenden Seitenwangen eingeschraubt sind. Das Einschrauben erfolgt somit mit der Stirnseite des geschraubten Stiftelements, die die DLC-Beschichtung trägt, zuvorderst durch die jeweilige Durchgangsbohrung hindurch. In der jeweiligen Durchgangsbohrung ist ein Innengewinde eingebracht, das mit einem Außengewinde des Schraubkörpers korrespondiert. Die axiale Positionierung des Schraubkörpers erfolgt derart, dass die DLC-Beschichtung auf der Stirnseite innen über die Seitenwange ein gewisses Maß hervorsteht, so dass das Planetenrad die beschichte Gleitfläche kontaktieren kann und von der übrigen Fläche der Seitenwange in jeder Betriebssituation freigestellt ist. In konkreter Ausgestaltung kann vorgesehen sein, dass zwischen einem Schraubenkopf des Schraubkörpers und der Seitenwange zumindest eine Distanzscheibe angeordnet ist, zur Festlegung einer axialen Position des Schraubkörpers bezüglich der Seitenwange.

Die Aufgabe wird ferner gelöst durch eine Windkraftanlage, umfassend eine Gondel, an der drehbar ein Rotor und ein Generator angebracht sind, wobei der Mehrblattrotor drehmomentübertragend über einen Antriebsstrang mit dem Generator verbunden ist und der Antriebsstrang ein Planetengetriebe wie zuvor beschrieben umfasst. Der Antriebsstrang ist in der Gondel aufgenommen und das Planetengetriebe ist gemäß einer der zuvor beschriebenen Ausführungsformen ausgebildet.

Die Aufgabe wird ferner gelöst durch ein Computerprogrammprodukt zum Simulieren eines Betriebsverhaltens einer in einer Windkraftanlage eingesetzten Planetengetriebes, wobei das Planetengetriebe gemäß einer zuvor beschriebenen Ausführungsform ausgebildet ist. Dazu kann das Computerprogrammprodukt Daten zum Betriebsverhalten der Gleitlagerung eines Planetenrades des Getriebes umfassen. Ferner kann das Computerprogrammprodukt Simulationsroutinen umfassen, die dazu ausgebildet sind, basierend auf Angaben zum vorliegenden Betriebszustand, beispielsweise einer Drehzahl, eines Drehmoments, einer Schmierstofftemperatur, einer Umgebungstemperatur, einer Axialbeanspruchung, einer Radialbeanspruchung und Verbindung mit Abmessungen des Planetengetriebes zu simulieren. Dies kann ein Biegeverhalten, ein Ermüdungsverhalten, eine Veränderung einer axialen Vorspannkraft, ein thermisches Verhalten und/oder ein Vibrationsverhalten umfassen. Das Computerprogrammprodukt kann auch eine Datenschnittstelle aufweisen, über die die Angaben zum vorliegenden Betriebszustand vorgebbar sind. Ebenso kann das Computerprogrammprodukt auch eine Datenschnittstelle zum Ausgeben von Simulationsergebnissen aufweisen. Darüber sind Resultate des Computerprogrammprodukts an andere simulationsgerichtete Computerprogrammprodukte ausgebbar. Erfindungsgemäß ist das Planetengetriebe, dessen Betriebsverhalten mittels des Computerprogrammprodukts simulierbar ist, gemäß mindestens einer der oben skizzierten Ausführungsformen ausgebildet.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische und ausschnittsweisen Darstellung eines Planetengetriebes;
Fig. 2: eine Detaillierung eines Planetengetriebes im Bereich des Planetenträgers;
Fig. 3: eine weitere Detaillierung eines Bereichs einer Seitenwangen des Planetenträgers gemäß Figur 2;
Fig. 4: eine Axialansicht einer der Seitenflanken des Planetenträgers gemäß Figur 2;
Fig 5a), 5b): eine nicht maßstabsgetreue Positionierung eines Planetenrades gegenüber der Planetenachse des Planetenträgers gemäß Figur 2 und
Fig. 6: eine perspektivische Darstellung einer Windkraftanlage.

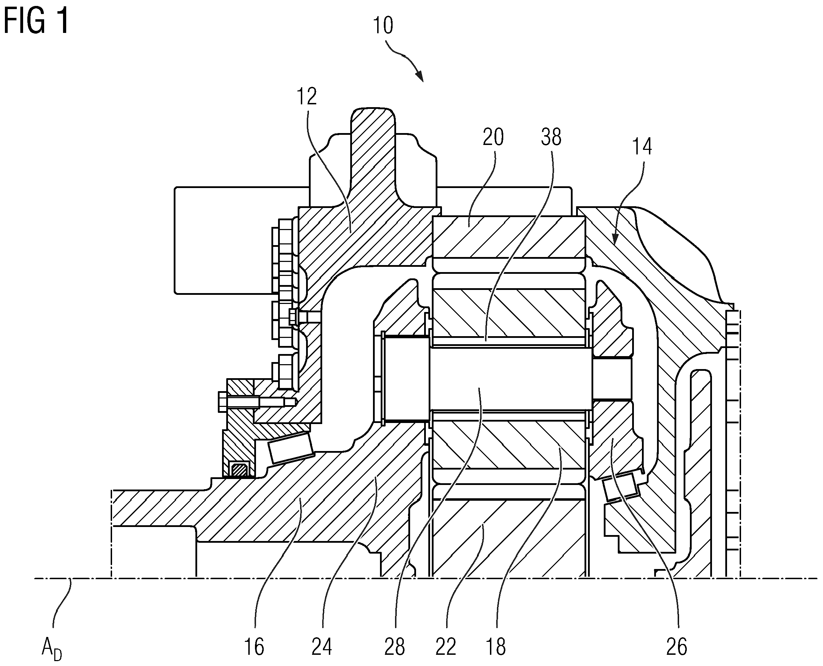

Die Figur 1 zeigt in einer schematischen und ausschnittsweisen Darstellung ein Getriebe 10. Das Getriebe 10 ist als Planetengetriebe ausgeführt, von dem lediglich eine erste Planetenstufe 14 dargestellt ist. Es können mehrere Planetenstufen 14 vorgesehen sein. Das Getriebe 10 kann Teil einer im weiteren Verlauf noch beschriebenen Windkraftanlage sein und zur Übertragung eines Antriebsmoments einen Rotor mit einem Generator verbinden.

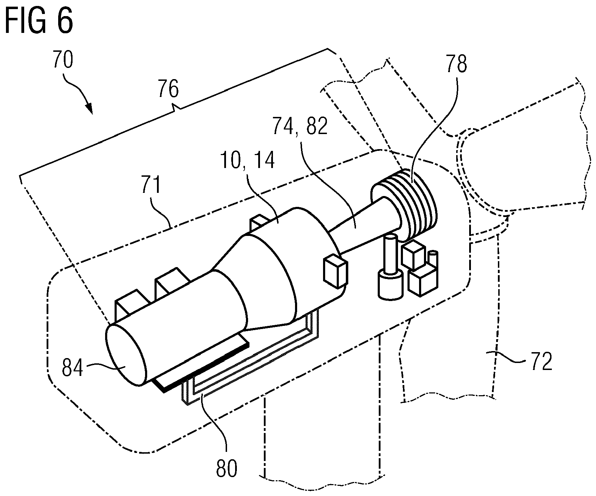

Das Getriebe 10 umfasst ein Getriebegehäuse 12, das mehrteilig ausgeführt sein kann und in dem ein Planetenträger 16 der Planetenstufe 14 um eine Drehachse A_{D} umläuft. Der Planetenträger 16 hält mehrere um jeweilige Planetenachsen 28 drehbar gelagerte Planetenräder 18, wobei die Planetenräder 18 wechselseitig mit einem in dem Getriebegehäuse 12 gehaltenen Hohlrad 20 und einem in dem Getriebegehäuse 12 drehbar gehaltenen Sonnenrad 22 in einem Verzahnungseingriff stehen. Die Planetenräder 18 sind über Gleitlager 38 gegenüber der Planetenachse 28 gelagert. Es kann vorgesehen sein, dass ein Rotor 72 einer Windkraftanlage 70 zumindest mittelbar den Planetenträger 16 rotatorisch antreibt, vgl. hierzu Figur 6. Eine weitere Beschreibung des strukturellen Aufbaus des Getriebes 10 ist an dieser Stelle nicht erforderlich.

Nicht dargestellt aber alternativ vorgesehen sein kann auch eine Ausführung des Getriebes 10, bei der der Planetenträger 16 der Planetenstufe 14 rotatorisch festgesetzt ist und der Rotor 72 der Windkraftanlage 70 zumindest mittelbar ein drehbar gelagertes Hohlrad 20 antreibt.

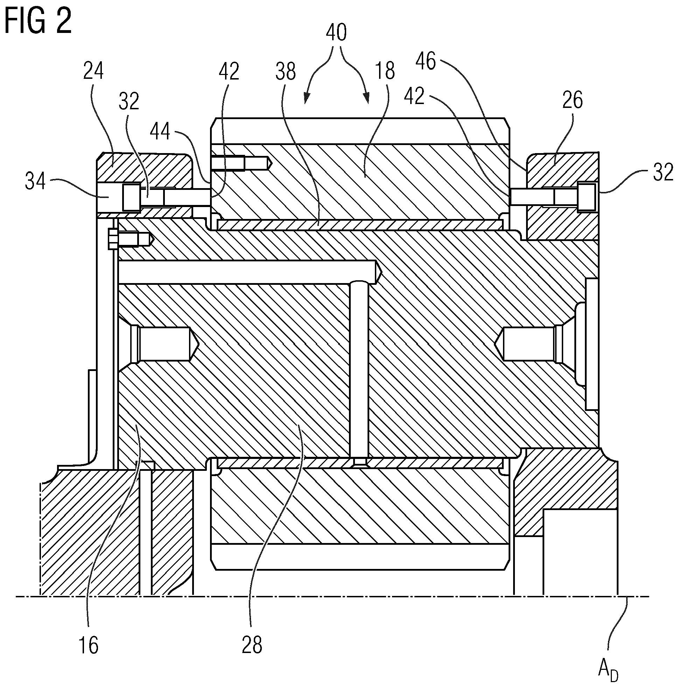

Die Figur 2 zeigt eine Detaillierung des Getriebes 10 im Bereich des Planetenträgers 16 und eines auf einer Planetenachse 28 drehbar gehaltenen Planetenrades 18. Das radial außen mit dem Planetenrad 18 kämmende Hohlrad 20 und das radial innen mit dem Planetenrad 18 kämmende Sonnenrad 22 sind nicht dargestellt. Das Planetenrad 18 ist über das Gleitlager 38 radial gelagert. Der Planetenträger 16 bildet zwei sich in radialer Richtung erstreckende und in einem axialen Abstand zueinander stehende Seitenwangen 24, 26 aus. Zwischen den beiden Seitenwangen 24, 26 befindet sich ein Zwischenraum 40, in dem die Planetenräder 18 aufgenommen sind. Die Planetenräder 18, von denen die Figur 2 exemplarisch lediglich eins zeigt, sitzen somit in axialer Richtung betrachtet zwischen den Seitenwangen 24, 26 ein. Infolge von auf die Planetenräder 18 wirkenden Axialkräften haben die Planetenräder 18 je nach Drehrichtung ein Bestreben in Richtung einer der Seitenwangen 24, 26 zu laufen. Um die Planetenräder 18 folglich in ihrer axial vorgesehenen Position zu halten, sitzt in einer Durchgangsbohrung 34 jeder Seitenwange 24, 26 für jedes Planetenrad 18 ein als Schraubkörper ausgebildetes Stiftelement 32 ein. Die Schraubkörper 32 sind in axialer Richtung derart positioniert, dass sie zumindest mit einer Stirnseite 42 in den Zwischenraum 40 der Seitenwangen 24, 26 hineinragen. Durch dieses Hineinragen wird sichergestellt, dass die Seitenflanken 44 des Planetenrades 18 von der jeweiligen Innenfläche 46 der Seitenwangen 24, 26 in einer Montage- und einer Betriebssituation freigestellt sind.

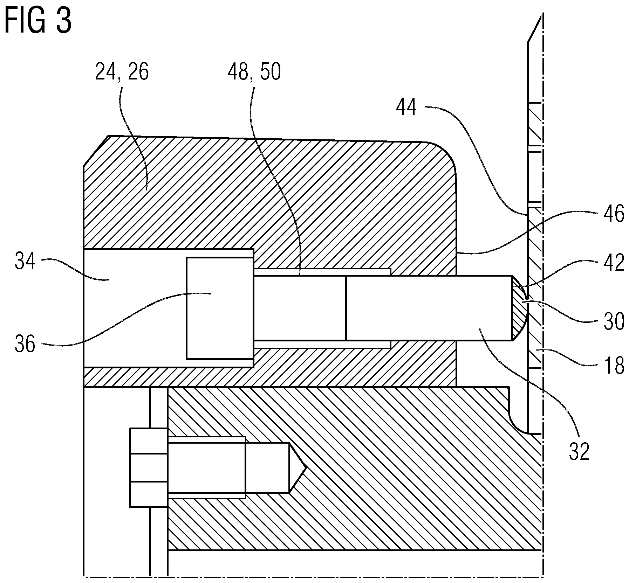

Die Figur 3 zeigt eine weitere Detaillierung und zwar den Bereich einer der Seitenwangen 24, 26, in dem in der Durchgangsbohrung 34 ein als Schraubkörper ausgebildetes Stiftelement 32 einsitzt. Der Schraubkörper 32 bildet einerseits einen Schraubenkopf 36 aus und andererseits ist an der in den Zwischenraum 40 ragenden Stirnseite 42 eine Gleitfläche 30 aus einer verschleißfesten Schicht aus Diamond-Like-Carbon vorgesehen. Über die Gleitfläche 30 aus einer verschleißfesten Schicht aus Diamond-Like-Carbon ist jeweils das entsprechende Planetenrad 18 gegenüber den Seitenwangen 24, 26 axial gleitgelagert, so dass hierüber eine in das Planetenrad 18 eingebrachte Axialkraft gegenüber dem Planetenträger 16 abgestützt werden kann. Die Gleitflächen 30 weisen im Wesentlichen einen balligen Oberflächenverlauf auf. Die Schraubkörper 32 bilden ein Außengewinde 48 aus und sind hierüber in ein korrespondierendes Innengewinde 50 in der Durchgangsbohrung 34 der jeweiligen Seitenwange 24, 26 geschraubt. Der Schraubkörper 32 kann beispielsweise ein metrisches Gewindemaß in einer Größenordnung von beispielsweise M16 bis M20 aufweisen.

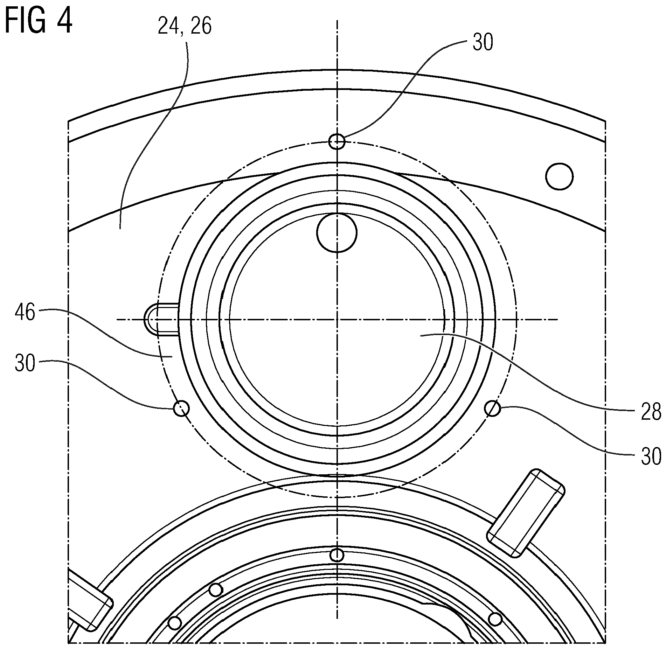

Die Figur 4 zeigt rein exemplarisch eine Axialansicht einer der Seitenflanken bzw. Stirnflächen des Planetenträgers 16. Ein Planetenrad 18 ist nicht dargestellt. Zu erkennen ist, dass über den Umfang, radial außerhalb der Planetenachse 28 drei Gleitflächen 30 aus einer verschleißfesten Schicht aus Diamond-Like-Carbon angeordnet sind. In dem drei dieser Gleitflächen 30 vorgesehen sind, ergibt sich eine statisch bestimmte Auflageebene für das jeweilige Planetenrad 18 während der Montage und während eines Betriebs.

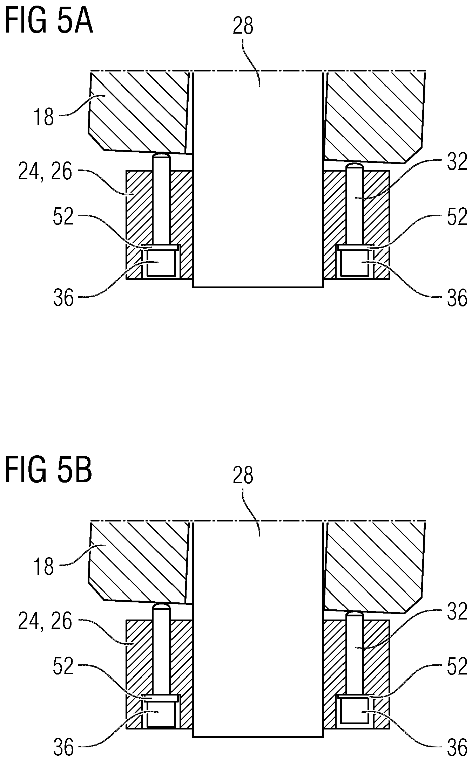

Die Figuren 5a) und 5b) zeigen rein exemplarisch und nicht maßstabsgetreu eine Positionierung eines Planetenrades 18 gegenüber der Planetenachse 28 und gegenüber der einen Seitenwange 24, 26. Das Gleitlager 38 ist nicht dargestellt. In der Seitenwange 24, 26 sind zwei Schraubkörper 32 mit jeweiliger Gleitfläche 30 aus einer verschleißfesten Schicht aus Diamond-Like-Carbon vorgesehen. Zu erkennen ist, dass das Planetenrad 18 unter einem maximalen Kippwinkel, welcher nicht maßstäblich ist, zu der Planetenachse 28 steht. Ferner sind die Schraubkörper 32 mit Distanzscheiben 52 unter dem Schraubenkopf 36 in die Seitenwangen 24, 26 eingesetzt. Hierbei unterscheiden sich die beiden Darstellungen der Figuren 5a) und 5b) dadurch, dass in der Figur 5a) die axiale Position des rechten Schraubkörpers 32 nicht geeignet ist, das Planetenrad 18 unter dem maximalen Kippwinkel zu tragen. Um dies zu vermeiden, können die Stärken der unter den Schraubenköpfen 36 der Schraubkörper 32 untergelegten Distanzscheiben 52 derart aufeinander abgestimmt werden, dass das Planetenrad 18 auch unter dem maximalen Kippwinkel von allen Gleitflächen 32 getragen wird, wie die Figur 5b) zeigt.

In der Figur 6 ist eine Ausführungsform einer Windkraftanlage 70 dargestellt. Die Windkraftanlage 70 umfasst eine Gondel 71, an der drehbar ein Mehrblattrotor 72 angebracht ist. Der Mehrblattrotor 72 ist mit einer Hauptwelle 74 drehmomentübertragend verbunden, wobei die Hauptwelle 74 zu einem Antriebsstrang 76 gehört. Der Antriebsstrang 76 umfasst ferner ein Getriebe 78, das drehmomentübertragend mit der Hauptwelle 74 verbunden ist. Das Getriebe 10 weist zumindest eine Planetenstufe 14 auf und ist wiederum über eine Hauptlagereinheit 82 mit einem Generator 84 gekoppelt. In der Hauptlagereinheit 82 ist eine Hauptwelle 74 vorgesehen ist.

### Bezugszeichenliste

- 10: Planetengetriebe
- 12: Getriebegehäuse
- 14: Planetenstufe
- 16: Planetenträger
- 18: Planetenräder
- 20: Hohlrad
- 22: Sonnenrad
- 24: Seitenwange
- 26: Seitenwange
- 28: Planetenachse
- 30: Gleitfläche
- 32: Stiftelement
- 34: Durchgangsbohrung
- 36: Schraubenkopf
- 38: Gleitlager
- 40: Zwischenraum
- 42: Stirnseite
- 44: Seitenflanke
- 46: Innenfläche
- 48: Außengewinde
- 50: Innengewinde
- 52: Distanzscheibe
- 70: Windkraftanlage
- 71: Gondel
- 72: Rotor
- 74: Hauptwelle
- 76: Antriebsstrang
- 78: Rotorflansch
- 80: Maschinenträger
- 82: Hauptlagereinheit
- 84: Generator

## Patentansprüche

1. Planetengetriebe (10) für eine über einen Rotor (72) angetriebene Windkraftanlage (70) mit
zumindest einer in einem Getriebegehäuse (12) um eine Drehachse A_{D} umlaufenden Planetenstufe (14),
wobei die zumindest eine Planetenstufe (14) einen Planetenträger (16) und ein Hohlrad (20) aufweist und der Planetenträger (16) oder das Hohlrad zumindest mittelbar mit dem Rotor (72) antriebsverbunden ist und
wobei der Planetenträger (16) mehrere in dem Planetenträger (16) umlaufend und radial gleitgelagerte und wechselseitig mit dem Hohlrad (20) und einem Sonnenrad (22) in einem Verzahnungseingriff stehende Planetenrädern (18) aufweist und
wobei die Planetenräder (18) zwischen Seitenwangen (24, 26) des Planetenträgers (16) aufgenommen und über in jeweiliger axialer Richtung hervorstehende Gleitflächen (30) der Seitenwangen (24) axial gleitgelagert sind,
**dadurch gekennzeichnet, dass**
die Gleitflächen (30) aus einer verschleißfesten Schicht gebildet sind.

2. Planetengetriebe (10) nach Anspruch 1, **dadurch gekennzeichnet, dass** die verschleißfeste Schicht aus Diamond-Like-Carbon oder durch eine nitriergehärtete Schicht gebildet ist.

3. Planetengetriebe (10) nach Anspruch 1 oder 2, **dadurch gekennzeichnet, dass** jede Seitenwange (24, 26) mehrere, vorzugsweise drei, umfänglich beabstandete Gleitflächen (30) aufweist.

4. Planetengetriebe (10) nach Anspruch 3, **dadurch gekennzeichnet, dass** eine Drehachse A_{D} der Planetenräder (18) innerhalb eines durch die drei umfänglich beabstandeten Gleitflächen (30) aufgespannten Dreiecks liegt.

5. Planetengetriebe (10) nach einem der Ansprüche 1 bis 4, **dadurch gekennzeichnet, dass** die Gleitflächen (30) im Wesentlichen jeweils einen balligen Oberflächenverlauf aufweisen.

6. Planetengetriebe (10) nach einem der Ansprüche 1 bis 5, **dadurch gekennzeichnet, dass** die Gleitflächen (30) stirnseitig auf jeweils in axialer Richtung in die Seitenwangen (24, 26) eingesetzten Stiftelementen (32) angeordnet sind.

7. Planetengetriebe (10) nach Anspruch 6, **dadurch gekennzeichnet, dass** die Stiftelemente (32) in jeweiligen Durchgangsbohrungen (34) der Seitenwangen (24, 26) einsitzen.

8. Planetengetriebe (10) nach Anspruch 6 oder 7, **dadurch gekennzeichnet, dass** die Stiftelemente (32) als Schraubkörper ausgeführt sind und in die jeweilige Seitenwange (24, 26) eingeschraubt sind.

9. Planetengetriebe (10) nach Anspruch 8, **dadurch gekennzeichnet, dass** zwischen einem Schraubenkopf (36) des Schraubkörpers (32) und der Seitenwange (24, 26) zumindest eine Distanzscheibe (38) angeordnet ist, zur Festlegung einer axialen Position des Schraubkörpers (32) bezüglich der Seitenwange (24, 26).

10. Antriebsstrang (76) für eine Windkraftanlage (70) zur drehmomentübertragenden Verbindung eines Rotors (72) mit einem Generator (84), umfassend eine Hauptlagereinheit (82) und einer Hauptwelle (74) und ein über die Hauptwelle (74) angetriebenes Getriebe (10),
**dadurch gekennzeichnet, dass** das Getriebe (10) als Planetengetriebe nach einem der vorangegangenen Ansprüche ausgebildet ist.

11. Windkraftanlage (70), umfassend einen Rotorflansch (78) mit einem Rotor (72) und einen Generator (112), wobei ein an einem Maschinenträger (80) gehaltener und den Rotorflansch (78) mit dem Generator (84) verbindender Antriebsstrang (76) vorgesehen ist, **dadurch gekennzeichnet, dass** der Antriebsstrang (76) nach Anspruch 10 ausgebildet ist.

12. Computerprogrammprodukt zum Simulieren eines Betriebsverhaltens einer in einer Windkraftanlage (70) eingesetzten Planetengetriebe (10), wobei das Planetengetriebe (10) nach einem der Ansprüche 1 bis 9 ausgebildet ist
